# EUROPEAN PATENT SPECIFICATION

(11) **EP 1 050 805 B1**
(45) Date of publication and mention of the grant of the patent: **17.12.2008**
(21) Application number: 99410055.0
(22) Date of filing: 03.05.1999
(51) Int. Cl.: G06F 9/38

(54) **Transfer of guard values in a computer system**
Übertragung von Schutzwerten in einem Rechnersystem
Transmission de valeurs de protection dans un système d' ordinateur

(43) Date of publication of application: 08.11.2000
(73) Proprietor: STMicroelectronics S.A., 92120 Montrouge (FR)
(72) Inventor: Uguen, Laurent, 38000 Grenoble (FR); Ferroussat, Sébastien, 38600 Fontaine (FR)
(74) Representative: Dossmann, Gérard

(56) References cited:
- EP-A- 0 403 014
- EP-A- 0 490 524
- US-A- 5 889 984
- LABROUSSE J ET AL: "CREATE-LIFE: A MODULAR DESIGN APPROACH FOR HIGH PERFORMANCE ASIC'S" COMPUTER SOCIETY INTERNATIONAL CONFERENCE (COMPCON), SPRING MEETING, LOS ALAMITOS, FEB. 26 - MAR. 2, 1990, no. CONF. 35, 26 February 1990 (1990-02-26), pages 427-433, XP000146217 INSTITUTE OF ELECTRICAL AND ELECTRONICS ENGINEERS ISBN: 0-8186-2028-5

## Description

The present invention relates to a method of transferring guard values and to a computer system utilising the method.

LABROUSSE et al. : « CREATE-LIFE : a modular design approach for high performance ASIC's », Computer Society International Conference (COMPCON), Spring meeting, LOS ALAMITOS, Feb.26-Mar. 2, 1990, no CONF. 35,26 February 1990 (1990-02-26), pages 427-433, XP000146217 Institute of electrical and electronics engineers ISBN: 0-8186-2028-5 discloses a so called "LIFE" architecture based on the VLIW ideas, which use the "guarded operation" concept. All functional units, in particular branch unit, ALU's, register file unit, are connected to a central multiport memory from which they take their operands and into which they write the results.

US 5 889 984 discloses a processor where separate integer and floating point units are utilized. Conditions generated in the integer unit are transferred and made compatible for use in the floating point unit by floating point conditional branch and move operations.

Computer systems can operate in which instructions include a guard indicator so that the execution or otherwise of the instruction is dependent upon the value of the guard indicator. Problems do however arise when a plurality of instructions are executed simultaneously in a plurality of parallel execution units. This may arise in computer systems operating in superscalar or very long instruction word (VLIW) instruction modes so that the execution of some instructions may affect the guard values to be associated with other instructions in parallel execution units. Problems may also arise from pipelined execution of instructions so that the execution of some later instructions commences prior to the completion of execution of earlier instructions in the pipeline.

In a computer system which requires the transfer of guard values between parallel execution units, it is important that the transfer of guard values is accomplished as promptly and efficiently as possible. This however should be done without transferring incorrect guard values and, preferably, without stalling the operation of the pipelined execution units.

Guarded instruction execution can be referred to as predicated instruction execution.

According to one aspect of the present invention there is provided a computer system for executing instructions having assigned guard indicators, which system comprises instruction supply circuitry, a plurality of parallel execution units for receiving respective instructions from the supply circuitry, each instruction having a respective guard indicator selected from a set of guard indicators, common to the plurality of execution units, one of said execution units including a master guard value store containing a master representation of current values for the guard indicators in said set of guard indicators and guard value transfer circuitry operable to transfer a guard value from said master store to another of said execution units in response to a sendguard instruction being executed in said one execution unit, wherein the instruction supply circuitry comprises a main instruction queue for holding instructions to be supplied to the parallel execution units and a subsidiary instruction queue for holding sendguard instructions, with the subsidiary queue having priority access to the execution pipelines to avoid unnecessary delays for execution of sendguard instructions.

According to another aspect of the present invention there is provided a method of executing instructions in a computer system, said instructions having assigned guard indicators, which method comprises supplying a plurality of instructions to parallel execution units, each instruction having a respective guard indicator selected from a set of guard indicators common to the plurality of execution units, holding a master set of current values for the guard indicators in one execution unit, effecting a transfer of the master guard value from said one execution unit in response to a sendguard instruction being executed in said one execution unit wherein instructions to be supplied to the parallel execution unit, save for said sendguard instructions, are held in a main instruction queue and wherein said sendguard instructions are held in a subsidiary queue having priority access to the execution pipelines to avoid unnecessary delays for execution of sendguard instructions.

Thus there is a separate queue for sendguard instructions which has priority access to the execution pipeline. If this is done in the context of using guard value modifying instructions which can modify guard values and which are held in the main instruction queue, it is important to check before each sendguard instruction is supplied to the execution pipeline that no earlier guard value modifying instructions affecting the guard value requested by the sendguard instruction is still waiting in the main instruction queue.

According to the embodiment described herein, each execution unit comprises a plurality of pipelined stages with synchronised pipeline cycles for each of the execution units. Circuitry is provided to allow for prompt despatch of a guard value requested by a sendguard microinstruction, regardless of its dependency on earlier guard value modifying instructions in the pipeline, and without stalling the pipeline.

For a better understanding of the present invention and to show how the same may be carried into effect, reference will now be made by way of example to the accompanying drawings in which:

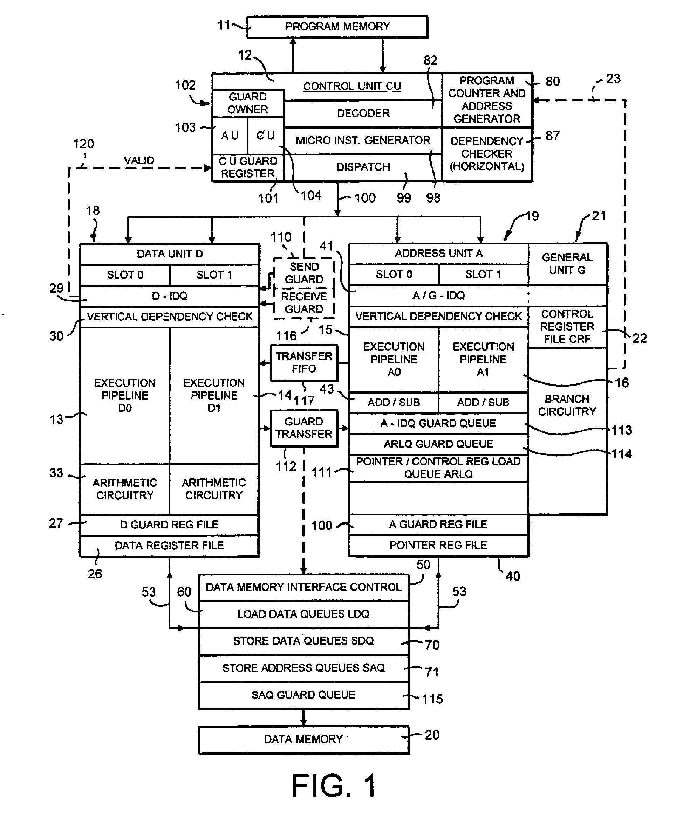

Figure 1 shows a computer system in accordance with one embodiment of the invention;
Figure 2 shows the layout of the instruction queues;
Figure 3 is a diagram illustrating circuitry in the pipeline to avoid stalling when executing sendguard instructions; and
Figure 4 is a partial diagram of a microinstruction format.

The computer system of this example is arranged for the parallel execution of a plurality of instructions and is particularly suited to providing a high digital signal processing (DSP) performance. Instructions are held in a program memory 11 and after passing through a control unit 12 are supplied to four parallel execution pipelines 13,14,15 and 16. Pipelines 13 and 14 are shown as slot 0 and slot 1 of a data unit arranged to execute instructions carrying arithmetic operations. Pipelines 15 and 16 are shown as slot 0 and slot 1 of an address unit 19 used to execute instructions for memory accesses to a data memory 20. Slot 1 or Slot 0 of the address unit 19 may also be used to supply instructions to a general unit 21 which shares some resources with the address unit 19. The general unit 21 includes a control register file 22 as well as branch circuitry which is used to provide instruction branch information on line 23 to the control unit 12.

The two pipelines 13 and 14 in the data unit 18 share a common data register file 26 and a common guard register file 27 holding the master guard values which may be associated with the instructions. The two pipelines also derive instructions from a common instruction dispatch queue (D-IDQ) 29 in the data unit 18 and instructions in the queue 29 are checked for data dependency by common vertical dependency check circuitry 30 in the data unit 18. The sequence of operations in each of the pipeline stages in the data unit 18 include an operand fetch usually accessing one of the register files 26 or 27 followed by two execution stages which may use arithmetic circuitry 33 followed by a data write stage at which the result of an arithmetic operation is returned to the register file 26 and 27. A similar pipeline exists for both pipelines 13 and 14 on the data unit 18.

Similarly for the address unit 19, both pipelines 15 and 16 access a common register file 40 holding pointer values for use in load or store operations in the data memory 20. The two pipelines each take their instructions from a common instruction dispatch queue (A-IDQ) 41 and a similar vertical dependency check is provided in common for both pipelines 15 and 16 in the address unit 19. The vertical dependency check is similar to that already referred to in the data unit 18. In executing instructions through the two pipelines 15 and 16, accesses will be made to the register file 40. Add and subtract units 43 may be used in execution of the instructions. Each of the pipelines 15 and 16 in the address unit 19 includes an operand fetch followed by an execution stage and an address write back stage.

Both the data unit 18 and the address unit 19 are connected to the data memory 20 through a data memory interface control 50. The control 50 is connected by buses 53 to both the data unit 18 and the address unit 19. The interface control 50 includes a plurality of queues each connected to the buses 53. These queues include load data queues (LDQ) 60 for data awaiting loading into register files of the data unit 18 or address unit 19. The interface control 50 also includes store data queues (SDQ) 70 for data awaiting storage in the memory 20. Store address queues (SAQ) 71 are provided to indicate the locations in the memory 20 at which the data is to be stored.

It will be understood that when instructions are executed to load data from the data memory 20 into the data register files of the data unit 18, the address unit 19 will access the data memory 20 and load the required data into the load data queues 60 prior to completing the update of the data register file 26 by transferring the data from the appropriate queue 60. Similarly when instructions are executed to store data from the data unit 18 into the data memory 20 the appropriate data may be held in the store data queues 70 together with the store addresses in queue 71 prior to completing the store operation in the data memory 20.

By executing the memory addressing instruction in the address unit 19 in separate parallel pipelines from those provided in the data unit 18, the computer system operates access decoupling in that the memory accesses are effected independently of the arithmetic operations carried out within the data unit 18. This reduces the problem of memory latency. In a digital signal processing system which operates regular and repeated operations the memory latency can be hidden from the executing program.

In the above description, all instructions which are fed through pipelines 13, 14, 15 and 16 are subject to a vertical dependency check and if any data dependency is found which cannot be resolved by a bypass, the execution unit operates to cause a temporary stall in one of the pair of pipelines 13 or 14 or in the pair 15 and 16 so as to cause a temporary delay in one of the pipelines of the pair so as to resolve the data dependency. It will be understood that a check for a data dependency includes any form of data, including data representing guard values. The circuitry described in the following, however, reduces the likelihood of stalling on guard dependencies.

The control unit 12 is also arranged to provide a horizontal dependency check. In this specification a data dependency between instructions that are supplied to the parallel pipelines in the same machine cycle is referred to as a horizontal dependency. The control unit 12 includes a program counter and address generator 80 to provide a memory address for an instruction fetch operation from the program memory 11. The machine may operate in a selected one of a plurality of instruction modes including superscalar modes of variable instruction bit length or in very long instruction word (VLIW) mode. The control unit 12 may include a process status register to indicate the instruction mode in which the machine is operating.

In use, a plurality of instructions are obtained from the memory 11 in a single fetch operation during one cycle and are decoded by a decoder 82 in the control unit 12. They are checked for horizontal data dependency by dependency checking circuitry 87 to indicate if a horizontal data dependency has been located. After decoding, the instructions are used to generate microinstructions for each of the execution pipelines. The instructions from the decoder 82 are passed to a microinstruction generator 98 which generates a plurality of parallel microinstructions which are output by a dispatch circuitry 99 through parallel paths 100 to the four parallel execution pipelines 13, 14, 15 and 16 and for the general unit 21. If a horizontal dependency was located, the microinstructions on lines 100 would include an indication to the instruction despatch queues of the data unit 18 or address unit 19 that some action, such as a pipeline stall, was necessary in the execution pipelines to resolve the horizontal dependency.

In this example, each instruction may be provided with a guard indicator G between G0 and G15. If a guard is true, then the instruction is executed (i.e. updates the architectural state of machine); if a guard is false the architectural state of machine is not changed by instruction execution. Resolution of a guard may be done in different pipeline stages of the machine.

The guard for each instruction may be selected between G0 and G15 and in this particular example the guard G15 is always true. The value true or false attributed to guards G0-G14 is however dependent upon the guard values held at any particular time in a guard register file. The master guard register file in this example is guard register file 27 (sometimes referred to herein as the architectural guard register) in the data unit 18. However, a supplementary or shadow guard register file (normally copies of the master file 27) is provided by a control unit guard register file 101 in the control unit 12. The control unit 12 also includes a register 102 to indicate which unit is currently known to be the guard owner in respect of each guard indicator. Register 102 has a first bit 103 for each guard indicator which if holding the value 1 indicates that the address unit 19 is currently the guard holder for that indicator. If bit 104 for each guard indicator is set to the value 1 then it indicates that the control unit 12 is currently the guard owner for that guard indicator. If neither bit 103 nor 104 is set then the default condition indicates that the master guard register file 27 must be used so that the data unit 18 is the guard owner. The guard values held in the guard register files can be changed by a guard modifier instruction (GMI) executed by the data unit 18 or the address unit 19. The address unit also has a shadow guard register file 100 which may be updated by guard modifier instructions executed by the address unit 19. Instructions executed by the data unit will update the master file 27 and the shadow file 101 in the control unit. Those executed by the address unit will update the shadow file 100 and the master file 27 (and hence the shadow file 101 in the control unit).

In normal operation the guard register file 27 in the data unit 18 maintains the architectural state of the guard values G0 to G14 and the register file is common to both execution pipelines 13 and 14. The operative values of the guards are the same for all execution pipelines although as will be explained below, the different pipelines may access different register files to obtain the guard values.

In this example the master register file for the guard values is held in the data unit 18 as it is the data unit that will most commonly execute instructions likely to change the value of the guards. Greater efficiency of execution cycles is therefore achieved by maintaining the master guard values in the register file which is directly accessed by execution of the instructions in the data unit 18. When instructions are fed through either slot 0 or slot 1 of the data unit 18 the required guard value may be taken directly from the master guard register file 27 in accordance with the guard indicator that accompanied the microinstructions fed into the data unit 18 from the control unit 12, unless the control unit 12 is the owner of the guard in which case the guard value will have been taken from the shadow registers 101 in the control unit 12.

In the case of instructions to the address unit 19, the more general position will be the default condition in the guard owner register 102 indicating that guard ownership does not belong to the address unit 19 or the control unit 12 and consequently the guard values required for execution of the instructions in the address unit 19 will need to be obtained from the guard register file 27 in the data unit 18. The microinstructions fed through lines 100 to the execution units will include supplying a "sendguard" (sndg) instruction to the data unit 18 as the same time as supplying the appropriate microinstruction to the correct slot of the address unit 19. The "sendguard" instruction will be initially slotted into the instruction dispatch queue 29 of the data unit 18 in the same cycle of operations as the microinstruction required for the address unit 19 is slotted into the instruction dispatch queue 41 for the address unit. All micro-instructions in a given execution unit are always executed in order and all guard manipulations and transfers are maintained in order with respect to these micro-instructions. This guarantees the synchronicity of guard transfers (i.e. for every guard emission from a given execution unit there is an opposite guard reception in another execution unit and all these are done in order. The control unit has responsibility to generate the correct micro-instructions for guard transfers; the sending or receiving execution unit only sees the send or receive (respectively) micro-instruction i.e. the action that it must do). In this way the correct sequencing occurs with the correct guard value being obtained from the guard register file 27 corresponding to the instruction being executed in the address unit 19. The supply of the "sendguard" instruction in such a situation is illustrated at 110 in the drawing. As described in the following, a bypass mechanism for sendguard instructions is implemented which nevertheless respects the requirement for synchronicity of guard transfers.

The address unit 19 has a queue of instructions 41 awaiting dispatch to the execution units. It also has a queue 111 (ARLQ) of items awaiting loading into the pointer or control registers 40 or 22. There is also the queue 71 in the memory interface control 50 of store addresses queues awaiting a memory access as a result of partial execution of a store instruction in the address unit 19. When the address unit 19 awaits a guard transfer from the data unit 18, the instruction in the address unit 19 is stalled in the A-IDQ 41 or in the ARLQ 111 or in the store address queue 71 until the requested guard value is transmitted from the data unit 18 through guard transfer circuitry 112 to the required destination. The transfer of the correct guard value will occur when the data unit 18 executes in its pipeline operation the "sendguard" instruction and the guard value which is transferred to either the address unit 19 or the data memory interface control 50 will need to be held in a queue ready for continued execution of the instruction once the stall is terminated. The transferred guard value will be held in an A-IDQ guard queue 113 if the guarded instruction was stalled in the IDQ 41. If the stall was in the ARLQ queue 111 then the transferred guard value will be held in an ARLQ guard queue 114. In the case of a store instruction where the store address had been added to the SAQ 71 in the interface control 50, the guard value will be transferred from circuitry 112 to an SAQ guard queue 115 in the data memory interface control 50 so that the memory access may be implemented in accordance with the entry in the SAQ 71 if the guard value transferred permits this. It will be seen that by this provision, the address unit can execute a memory store instruction as far as identifying the required store address and adding that address to a queue in the interface 50 prior to checking whether or not the guard value of the store instruction is true or false. The store operation will be held in the queue 71 until the guard value is checked and will only proceed to completion if the guard value is true. In each case where the guard value is transferred to the address unit 19 from the data unit 18, the stalled instruction for the address unit or general unit 21 will be resumed or rendered inoperative depending on the guard value transferred from the data unit file 27.

The use of the guard queues 113, 114 and 115 allow resynchronisation of the guard values with the microinstruction that caused the request "sendguard" 110 to be sent to the data unit 18. The above description for operation of a guarded store instruction indicated how the effective store address could be put on the queue 71 prior to resolving the guard value. The address unit 19 may be operated with an earlier stall in the execution of a store instruction so that the effective address is not calculated and fed to the interface control 50 until after the guard value has been transferred and resolved. Similarly a guarded load instruction may be executed by the address unit 19 to access the memory and obtain the required data for addition to the load data queue 60 prior to resolving the guard value. Alternatively the address unit may cause an earlier stall awaiting resolution of the guard value transferred from the data unit prior to obtaining the data from the memory and putting it into the queue 60. In the case where the data is obtained from the memory and put onto the load data queue 60 prior to resolution of the guard value, the appropriate register file 26, 40 or 22 is updated by a load operation from the load data queue 60 only if the guard value is found to be true. In the case of a false guard value, the register files are not updated and the appropriate execution unit effects a read of the load data queue 60 to remove the unwanted data from the queue without updating any destination register file.

As indicated above, the guard values to be assigned to the guard indicators G0-G14 can be modified by executing a guard modifier instruction. These can be executed by either the data unit 18 or the address unit 19. In the case of a guard modifier instruction executed by the data unit 18, the new guard value is calculated in the execution pipeline of the appropriate slot 0 or slot 1 of the data unit 18 and, whichever of these pipelines has been used, it will cause a new value of the guard to be written into the guard register file 27 at the end of the execution pipeline in order to update the register file 27. The guard modifier instructions may themselves be guarded.

In the case of the guard modifier instruction which is supplied to the address unit 19, the new value will be calculated on execution of the instruction in either slot 0 or slot 1 pipeline of the address unit 19 and the new value can be written into the address guard register file 100 of the address unit 19 at the end of the execution pipeline. However it is necessary for the new guard value to be transferred to the master guard register file 27 of the data unit 18 in order to update that master file at the correct cycle of operation. To achieve this, the control unit 12 arranges to supply a "receive guard" instruction to the data unit 18 simultaneously with the supply of any microinstruction to the address unit 19 which will cause a new guard value to be calculated by the address unit 19. This "receive guard" instruction is illustrated at 116 in the drawing and is added to the instruction dispatch queue 29 of the data unit 18 in the same cycle as the microinstruction generating a new guard value is supplied to the address unit 19. As soon as the execution pipeline in the address unit 19 has calculated the new guard value it is supplied to a transfer FIFO 117 to enable supply of the new guard value to the data unit 18. The "receive guard" instruction supplied to the data unit 18 is treated by the data unit 18 in the same way as a guard modifier instruction except that it does not need to calculate the new guard value but merely obtains it from the FIFO 117.

The microinstruction generating the guard value is supplied to the IDQ 41 of the address unit 19 in the same cycle as the "receive guard" microinstruction is fed to the IDQ 29 of the data unit 18. As explained above, synchronisation is achieved between the two units so that the new guard value transferred through the FIFO 117 updates the master register file 27 at the correct point in the sequence of the instruction execution.

It is possible to execute a load GR instruction in order to load from memory 20 into the guard register files 27 and 100 of the data unit 18 in the address unit 19. This instruction is treated as a load data register and a load pointer register instruction and the correct value is obtained from memory and put into the load data queues 60. The transfer from the load data queues 60 to the address unit 19 and data unit 18 occurs independently and the data is maintained in the load data queue 60 until both units have read the appropriate data. The microinstructions in the instruction dispatch queues 29 and 41 necessary to load the guard registers 27 and 100 are stalled until the execution units of both the data unit 18 and the address unit 19 is empty of any guard modifier instructions. At that time the load guard register instructions can proceed to transfer the required value from the load data queue 60 into the guard register file without conflict with any other guard modifier instructions.

It is apparent that when the data unit 18 receives a sendguard microinstruction, the correct guard value should be selected and passed to the requesting execution unit as soon as possible to avoid unnecessary delays. A mechanism is described in the following which achieves this without unnecessary stalls in the data unit 18.

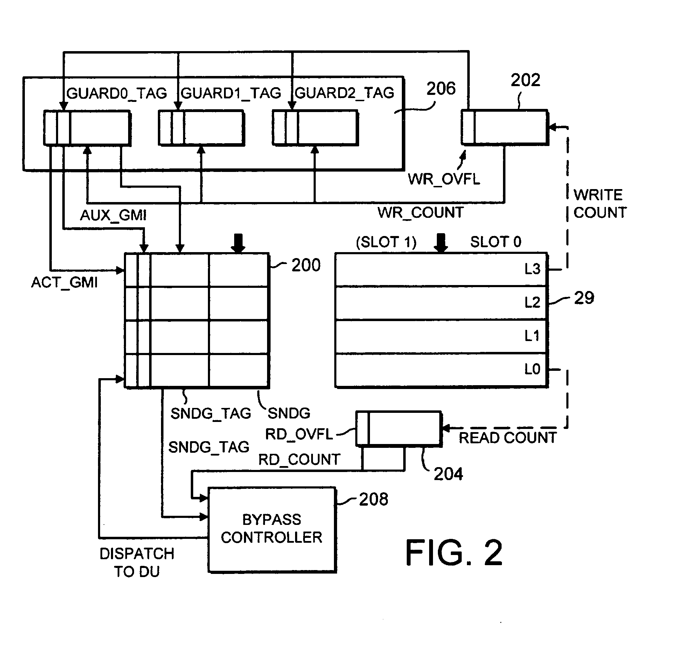

The instruction data queue 29 of the data unit is implemented as a FIFO having a plurality of storage locations, each of which holds two microinstructions (slot 0 and slot 1). Reference is made to Figure 2 which illustrates the main instruction FIFO 29 as having four storage locations L0 to L3, although in fact more than four would normally be provided. To implement the sendguard mechanism, a separate sendguard queue implemented as a FIFO 200 is provided for holding the sendguard (sndg) fields of any sendguard microinstructions written to the IDQ 29, each sndg field being associated with a sendguard tag sndg_tag. A write event counter 202 is incremented by 2 each time two new microinstructions are written to the main instruction FIFO 29. It includes an overflow bit wr_ovfl to take into account circular pointer effects. A read-event counter 204 counts the number of microinstructions read into the data unit pipelines 13,14. This may be two in each cycle or, where a horizontal slot dependency has been resolved, only one (i.e. a split sequence).

A gmi_tag register 206 holds a gmi_tag for each guard indicator. As already mentioned, there are fifteen guard indicators G0 to G14 with assigned guard values although only three such tags are shown in Figure 2 labelled guard0_tag,guard1_tag etc. Each tag has six bits. Four bits represent a write count which is a value read from the write counter 202 (plus 0 for slot 0, plus 1 for slot 1) whenever a guard modifier instruction affecting that guard indicator is written to the FIFO 29. One bit is an aux_gmi_tag bit which is the overflow bit wr_ovfl from the write counter 202. The remaining bit is an active gmi bit act_gmi which indicates whether there is a valid guard modifier instruction (GMI) stored in the main instruction FIFO 29 affecting that guard indicator. This bit is set to one if a new GMI affecting that guard indicator is written to the main instruction FIFO 29 where there was not one before or if there remain any active GMIs affecting that guard indicator in the main instruction FIFO 29.

Each time a sndg instruction is written to the sndg queue 200, the gmi_tag value for the guard indicator referred to in the sndg instruction is written to the sndg_tag associated with the sndg field is the sndg queue 200. Thus this indicates the symbolic slot position of the youngest GMI in the main instruction FIFO 29 modifying the requested guard indicator.

The purpose of the separate sndg queue is to provide a bypass feature into the data unit pipelines 13,14 so that as soon as a sndg instruction arrives it can be supplied to one of the pipelines 13,14 as soon as possible without unnecessary delays. However, it is important that it is not supplied to a pipeline in a cycle earlier than a GMI affecting that guard indicator which was expected to be executed earlier according to the instruction sequence in the original program. To make sure that this does not happen, a bypass controller 208 compares the read event count with the sndg tag at the head of the sndg queue 200 and the sndg instruction is supplied to the pipeline only if read-event counter > sndg-tag. Otherwise the next instruction in the FIFO 29 is fetched into the execution pipeline 13 or 14.

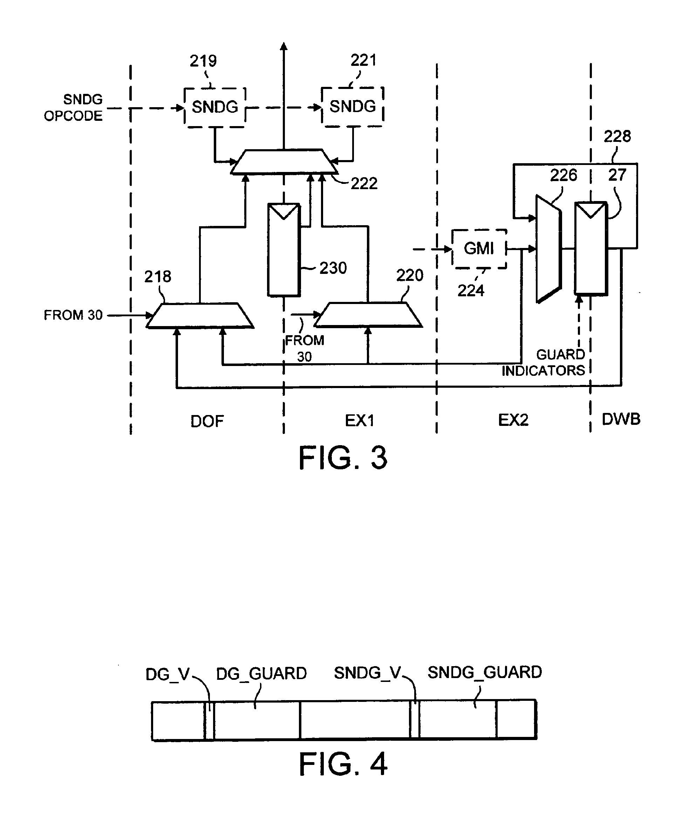

A mechanism will now be described with reference to Figure 3 which avoids stalls of sendguard instructions which enter the data unit pipeline 13 or 14. In order to achieve this, it is necessary to know the dependency between a sendguard instruction despatched into the data unit pipeline 13 or 14 and any guard modifier instructions affecting the value of the guard to be sent. Any such dependencies are resolved by the vertical dependency checker 30 for the data unit pipelines. Signals from the vertical dependency checker are despatched into the data unit pipelines to control multiplexors described hereinafter to avoid stalling regardless of guard dependencies.

The vertical dependency checker 30 uses information provided in the fields of the microinstructions supplied to the data unit. Figure 4 illustrates the relevant fields of a microinstruction. It will be appreciated that the microinstruction contains a number of other fields, but these are not included herein because they do not affect the dependency resolution. For guard modifier instructions, the relevant fields are dg-v which is equal to one when a guard is to be modified, and dg-guard which comprises four bits identifying which of the sixteen guard indicators is to be modified.

The fields relevant to sendguard instructions are sndg-v which is equal to one when a guard is to be sent and sndg-guard which identifies which guard indicator value is to be sent.

As has briefly been explained above, each of the data unit pipelines comprises a data operand fetch stage 210, a first execution stage EX1 212, a second execution stage EX2 214 and a data writeback stage DWB 216. Instructions and data are propagated through the pipeline on successive machine cycles, such that each pipeline stage represents operations in each cycle. Figure 3 does not illustrate the components of the pipeline which are necessary for the normal execution of instructions, nor does it show the interaction of the pipeline with the data register file 26. The required fields of the microinstructions are used at each appropriate stage in the pipeline and in particular the GMI and sendguard fields. The GMI fields dg-v and dg-guard are received in the DOF stage and are propagated through the subsequent first and second execution stages EX1 and EX2 as the instruction is executed. As a GMI instruction might itself be guarded, if it occurs that the guard indicator on which the GMI instruction is guarded is false, the field dg-v is unset and continues to propagate in the pipe with the unset value of zero. The dependencies between the sendguard instructions to be executed and any GMI instructions currently in the pipe can be resolved by using simple comparators with respect to the GMI fields and the sendguard fields. For example for a sendguard instruction in the DOF stage of the pipeline, a comparison is made between its corresponding sendguard fields sndg-v and sndg-guard and the information available in subsequent stages of the pipeline EX1, EX2 relating to a possible GMI instruction ahead in the pipeline. For example, if a guard modifier instruction affecting the guard indicator G0 is in the first execution stage EX1, and the sendguard instruction referring to G0 is in the data operand fetch stage, a specific signal is set indicating that such a dependency exists. These signals are set by the vertical dependency checking unit 30 and are used to control multiplexors in the pipeline as described later.

Circuitry for executing sndg instructions is shown in dotted outline referenced 219 in DOF stage 210 and 221 in EX1 stage 212. These sendguard execution units 219,212 receive sndg opcode from the sendguard instruction. Guard indicators for addressing the guard register file 27 are also supplied with the sendguard instruction. It will be appreciated that the pipeline includes other units, omitted for the sake of clarity. Figure 3 is merely a diagrammatic representation of the pipeline stages, and additionally illustrates circuitry providing a mechanism for avoiding stalls of sendguard instructions. The circuitry comprises a first selection multiplexor 218 located in the data operand fetch stage 210, a second selection multiplexor 220 located in the first execution stage 212 and a guard selection multiplexor 222 which can propagate the correct guard value in either the data operand fetch stage or the first execution stage as described in the following. A computation unit 224 allows guard values to be computed responsive to guard modifier instructions in the second execution stage EX2 214. The output of the computation unit 224 is supplied to the guard register file 27 via a guard value output multiplexor 226. The guard register file 27 is addressable via the guard indicators in a manner not shown in Figure 3 such that the computed guard value is written against the correct guard indicator. In each cycle, for each guard indicator either the existing value is written back into the guard register file via the feedback loop 228, or the newly modified guard value is written to the guard register file for the particular guard indicator. The mechanism operates as follows.

When there is no guard dependency, that is when there are no earlier instructions in the pipeline which imply the modification of the guard value which has been requested to be sent by the sendguard instruction which has just entered the pipeline, the first selection multiplexor 218 is controlled to supply the architectural guard value from the guard register file 27 and the guard selection multiplexor 222 outputs this guard value in the data operand fetch stage of the pipeline. Thus, only a single cycle is required to deal with the sendguard instruction and to despatch the correct guard value.

When there is an earlier instruction in the pipeline located two cycles ahead which modifies the guard value requested to be sent by the sendguard instruction, this guard value is computed in the second execution stage of the pipeline as the sendguard instruction is received in the data operand fetch stage. The just computed guard value is supplied to the first selection multiplexor 218 and is selected through to the guard selection multiplexor 222. Thus, this also allows the correct guard value to be despatched in the first cycle of execution of the sendguard instruction.

The mechanism is slightly more complicated in the case where a guard modifying instruction is located one cycle ahead of the sendguard instruction and is modifying the requested guard value. In this case, the sendguard instruction is not dealt with in the data operand fetch stage, but is propagated though to the first execution stage EX1. In the same machine cycle, the guard modifying instruction ahead of it is computed by the computation unit 224 in the second execution stage EX2 and the just computed value is returned to the second selection multiplexor 220. In this case therefore, the guard selection multiplexor 222 despatches the output of the second selection multiplexor 220 rather than the output of the first selection multiplexor 218 thereby allowing the sendguard instruction to be dealt with in two cycles. Although this is slower than a single cycle achieved in the first two cases, the performance is still high because no stalls in the pipeline have occurred.

By including a guard value store 230 at the output of the data operand fetch stage, it is also possible to deal with two sendguard instructions entering the pipeline one after the other immediately following a guard modifier instruction. The first sendguard instruction which has the guard modifier instruction just in front of it by one cycle is dealt with as just described. That is, it is propagated through to the first execution stage EX1 so that the guard value can be computed in the computation unit 224 in the second execution stage EX2. The just computed guard value is then despatched as already described. While this is happening it is however possible to deal with the second sendguard instruction in the data operand fetch stage. If the sendguard instruction relates to a guard value not affected by the guard modifier instruction, it can be dealt with in the normal way and the value selected from the architectural guard register 27 held in the store 230 ready for despatch on the subsequent cycle after the just computed guard value has been despatched. If the second sendguard instruction relates to the same guard indicator which has been modified by the earlier guard modifier instruction, the value which is held in the store 230 is the just computed value which is returned back to the first selection multiplexor 218 in the data operand fetch stage. This allows maximum use of the pipeline stages and avoids stalls of the sendguard instructions whatever are the dependencies.

## Claims

1. A computer system for executing instructions having assigned guard indicators, which system comprises instruction supply circuitry, a plurality of parallel execution units (18-19) for receiving respective instructions from the supply circuitry, each instruction having a respective guard indicator (G) selected from a set of guard indicators (E0-G15), common to the plurality of execution units, one of said execution units including a master guard value store (27) containing a master representation of current values for the guard indicators in said set of guard indicators and guard value transfer circuitry (112) operable to transfer a guard value from said master store to another of said execution units in response to a sendguard instruction being executed in said one execution unit, wherein the instruction supply circuitry comprises a main instruction queue (29,41) for holding instructions to be supplied to the parallel execution units and a subsidiary instruction queue (200) for holding sendguard instructions, with the subsidiary queue having priority access to the execution pipelines to avoid unnecessary delays for execution of sendguard instructions.

2. A computer system according to claim 1 in which said execution unit (18, 19) includes circuitry for executing guard value modifying instructions which are held in the main instruction queue and for updating said master guard value store (27) with any modified guard value.

3. A computer system according to claim 2 in which the instruction supply circuitry comprises a control unit (12) common to each parallel execution unit, said control unit including queue checking circuitry which is operable to check, before each sendguard instruction is supplied to the execution pipeline, that no earlier guard value modifying instructions affecting the guard value requested by the sendguard instruction is still waiting in the main instruction queue.

4. A computer system according to any one of the preceding claims in which each execution unit (18-19) comprises a plurality of pipelined stages (13-16) with synchronised pipelined cycles for each of the execution units.

5. A computer system according to claims 2 and 4, wherein the circuitry for executing guard value modifying instructions is located in a pipelined stage (EX2) downstream of an earlier pipelined stage (DOF, EX1) operable to execute sendguard instructions.

6. A computer system according to claim 5, comprising switching circuitry in the earlier pipelined stage for supplying a guard value which has been modified by a guard value modifying instruction in the subsequent pipelined stage in a machine cycle responsive to a sendguard instruction in the earlier pipelined stage in the same machine cycle.

7. A computer system according claim 1, in which each execution unit comprises first (DOF), second (EX1) and third (EX2) pipelined stages wherein the first and second pipelined stages contain circuitry for executing sendguard instructions, and the third pipelined stage (EX2) includes circuitry for executing guard value modifying instructions.

8. A computer system according to claim 7, which comprises switching circuitry for selecting, responsive to a sendguard instruction, whether a guard value held in the master guard value store or a guard value just modified by a guard value modifying instruction is despatched via the guard value transfer circuitry (112).

9. A computer system according to any one of the preceding claims in which said execution unit include execution pipelines providing access to a data memory (20), said pipelines including a first set of pipelines (15, 16) for use in executing instructions needed for memory access operations and a second set of pipelines (13, 14) arranged to carry out arithmetic operations, thereby providing decoupling of memory access operations from arithmetic operations.

10. A computer system according to claim 9 in which two parallel pipelines are provided for arithmetic operations (33) and access a common set of data registers including said master guard value store.

11. A computer system according to any one of the preceding claims in which said master guard value store comprises a register file.

12. A method of executing instructions in a computer system, said instructions having assigned guard indicators, which method comprises supplying a plurality of instructions to parallel execution units (18, 19), each instruction having a respective guard indicator (G) selected from a set of guard indicators common to the plurality of execution units, holding a master set of current values for the guard indicators in one execution unit, effecting a transfer of the master guard value from said one execution unit in response to a sendguard instruction being executed in said one execution unit wherein instructions to be supplied to the parallel execution unit, save for said sendguard instructions, are held in a main instruction queue (29, 41) and wherein said sendguard instructions are held in a subsidiary queue (200) having priority access to the execution pipelines to avoid unnecessary delays for execution of sendguard instructions.

13. A method according to claim 12, including executing instructions to modify said guard values wherein execution of an instruction to modify a guard value updates said master value, said guard value modifying instructions being held in the main instruction queue (29, 41)

14. A method according to claim 13, which comprises the step of checking, before each sendguard instruction is supplied to the execution pipeline, that no earlier guard value modifying instruction affecting the guard value requested by the sendguard instruction is still waiting in the main instruction queue.

## Patentansprüche

1. Computersystem zum Ausführen von Befehlen mit zugewiesenen Schutzindikatoren, welches aufweist: eine Befehlszufuhr-Schaltungsanordnung, mehrere parallele Ausführungseinheiten (18 - 19) zum Empfangen jeweiliger Befehle von der Zufuhr-Schaltungsanordnung, wobei jeder Befehl einen jeweiligen Schutzindikator (G) aufweist, der aus einem Satz von Schutzindikatoren (G0 - G15) ausgewählt ist, der den mehreren Ausführungseinheiten gemeinsam ist, wobei eine der Ausführungseinheiten einen Master-Schutzwertspeicher (27) aufweist, der eine Master-Darstellung aktueller Werte für die Schutzindikatoren in dem Satz von Schutzindikatoren enthält, und eine Schutzwert-Übertragungsschaltungsanordnung (112), die betreibbar ist, ansprechend auf eine Ausführung eines Sendeschutzbefehls in der einen Ausführungseinheit einen Schutzwert von dem Master-Speicher zu einer anderen der Ausführungseinheiten zu übertragen, wobei die Befehlszufuhr-Schaltungsanordnung eine Hauptbefehlswarteschlange (29, 41) zum Halten von den parallelen Ausführungseinheiten zuzuführenden Befehlen und eine Hilfsbefehlswarteschlange (200) zum Halten von Sendeschutzbefehlen aufweist, wobei die Hilfswarteschlange Priorität für einen Zugriff auf die Ausführungs-Pipelines hat, um unnötige Verzögerungen für die Ausführung von Sendeschutzbefehlen zu vermeiden.

2. Computersystem nach Anspruch 1, wobei die Ausführungseinheit (18, 19) eine Schaltungsanordnung zum Ausführen von Schutzwert-Modifikationsbefehlen, die in der Hauptbefehlswarteschlange gehalten werden, und zum Aktualisieren des Master-Schutzwertspeichers (27) mit einem modifizierten Schutzwert aufweist.

3. Computersystem nach Anspruch 2, wobei die Befehlszufuhr-Schaltungsanordnung eine Steuereinheit (12) aufweist, die allen parallelen Ausführungseinheiten gemeinsam ist, wobei die Steuereinheit eine Warteschlangen-Prüfschaltungsanordnung aufweist, die betreibbar ist, bevor jeder Sendeschutzbefehl der Ausführungs-Pipeline zugeführt wird, zu prüfen, dass keine früheren Schutzwert-Modifikationsbefehle, die den vom Sendeschutzbefehl angeforderten Schutzwert beeinflussen, noch in der Hauptbefehlswarteschlange warten.

4. Computersystem nach einem der vorhergehenden Ansprüche, wobei jede Ausführungseinheit (18 - 19) mehrere Pipeline-Stufen (13 - 16) mit synchronisierten Pipeline-Zyklen für jede der Ausführungseinheiten aufweist.

5. Computersystem nach Anspruch 2 und 4, wobei sich die Schaltungsanordnung zum Ausführen von Schutzwert-Modifikationsbefehlen in einer Pipeline-Stufe (EX2) stromabwärts einer früheren Pipeline-Stufe (DOF, EX1) befindet, die betreibbar ist, Sendeschutzbefehle auszuführen.

6. Computersystem nach Anspruch 5, welches aufweist: eine Schaltstufe in der früheren Pipeline-Stufe zum Zuführen eines Schutzwerts, der durch einen Schutzwert-Modifikationsbefehl in der folgenden Pipeline-Stufe in einem Maschinenzyklus modifiziert wurde, ansprechend auf einen Sendeschutzbefehl in der früheren Pipeline-Stufe in demselben Maschinenzyklus.

7. Computersystem nach Anspruch 1, wobei jede Ausführungseinheit aufweist: eine erste (DOF), eine zweite (EX1) und eine dritte (EX2) Pipeline-Stufe, wobei die erste und die zweite Pipeline-Stufe eine Schaltungsanordnung zum Ausführen von Sendeschutzbefehlen enthalten und die dritte Pipeline-Stufe (EX2) eine Schaltungsanordnung zum Ausführen von Schutzwert-Modifikationsbefehlen aufweist.

8. Computersystem nach Anspruch 7, welches aufweist: eine Schaltstufe, um, ansprechend auf einen Sendeschutzbefehl, auszuwählen, ob ein in dem Master-Schutzwertspeicher gehaltener Schutzwert oder ein gerade durch einen Schutzwert-Modifikationsbefehl modifizierter Schutzwert über die Schutzwert-Übertragungsschaltungsanordnung (112) abgesendet wird.

9. Computersystem nach einem der vorhergehenden Ansprüche, wobei die Ausführungseinheit aufweist: Ausführungs-Pipelines, die Zugriff auf einen Datenspeicher (20) bereitstellen, wobei die Pipelines einen ersten Satz von Pipelines (15, 16) zur Verwendung beim Ausführen für Speicherzugriffsoperationen benötigter Befehle und einen zweiten Satz von Pipelines (13, 14), die dafür eingerichtet sind, Rechenoperationen auszuführen, aufweisen, wodurch eine Entkopplung zwischen Speicherzugriffsoperationen und Rechenoperationen bereitgestellt wird.

10. Computersystem nach Anspruch 9, wobei zwei parallele Pipelines für Rechenoperationen (33) bereitgestellt sind und auf einen gemeinsamen Satz von Datenregistern, einschließlich des Master-Schutzwertspeichers, zugreifen.

11. Computersystem nach einem der vorhergehenden Ansprüche, wobei der Master-Schutzwertspeicher eine Registerdatei aufweist.

12. Verfahren zum Ausführen von Befehlen in einem Computersystem, wobei den Befehlen Schutzindikatoren zugewiesen sind, wobei das Verfahren folgende Schritte aufweist: Zuführen mehrerer Befehle zu parallelen Ausführungseinheiten (18, 19), wobei jeder Befehl einen jeweiligen Schutzindikator (G) aufweist, der aus einem Satz von Schutzindikatoren ausgewählt wird, der den mehreren Ausführungseinheiten gemeinsam ist, Halten eines Master-Satzes aktueller Werte für die Schutzindikatoren in einer Ausführungseinheit, Bewirken einer Übertragung des Master-Schutzwerts von der einen Ausführungseinheit, ansprechend auf eine Ausführung eines Sendeschutzbefehls in der einen Ausführungseinheit, wobei der parallelen Ausführungseinheit zuzuführende Befehle, abgesehen von den Sendeschutzbefehlen, in einer Hauptbefehlswarteschlange (29, 41) gehalten werden und wobei die Sendeschutzbefehle in einer Hilfswarteschlange (200) gehalten werden, die Priorität für den Zugriff auf die Ausführungs-Pipelines hat, um unnötige Verzögerungen für die Ausführung von Sendeschutzbefehlen zu vermeiden.

13. Verfahren nach Anspruch 12, bei dem Befehle zum Modifizieren der Schutzwerte ausgeführt werden, wobei die Ausführung eines Befehls zum Modifizieren eines Schutzwerts den Master-Wert aktualisiert, wobei die Schutzwert-Modifikationsbefehle in der Hauptbefehlswarteschlange (29, 41) gehalten werden.

14. Verfahren nach Anspruch 13, welches folgenden Schritt aufweist: Prüfen, bevor jeder Sendeschutzbefehl der Ausführungs-Pipeline zugeführt wird, dass kein früherer Schutzwert-Modifikationsbefehl, der den von dem Sendeschutzbefehl angeforderten Schutzwert beeinflusst, noch in der Hauptbefehlswarteschlange wartet.

## Revendications

1. Système informatique permettant d'exécuter des instructions ayant des indicateurs de protection attribués, ledit système comprenant un circuit fournissant des instructions, une pluralité d'unités d'exécution parallèles (18-19) destinées à recevoir des instructions respectives du circuit fournissant des instructions, chaque instruction ayant un indicateur de protection respectif (G) choisi dans un ensemble d'indicateurs de protection (G0-G15), commun à la pluralité d'unités d'exécution, l'une desdites unités d'exécution comprenant une mémoire de valeur de protection principale (27) contenant une représentation principale de valeurs courantes pour les indicateurs de protection dudit ensemble d'indicateurs de protection et un circuit de transfert de valeur de protection(112) apte à transférer une valeur de protection de ladite mémoire principale vers une autre desdites unités d'exécution en réponse à une instruction de protection d'envoi exécutée dans ladite une unité d'exécution, dans lequel le circuit fournissant des instructions comprend une file d'attente d'instructions principale (29, 41) pour conserver les instructions à fournir aux unités d'exécution parallèles et une file d'attente d'instructions secondaire (200) pour conserver les instructions de protection d'envoi, la file d'attente secondaire ayant un accès prioritaire aux pipelines d'exécution pour éviter des retards inutiles dans l'exécution des instructions de protection d'envoi.

2. Système informatique selon la revendication 1, dans lequel ladite unité d'exécution (18, 19) comprend un circuit destiné à exécuter des instructions modifiant les valeurs de protection qui sont conservées dans la file d'attente d'instructions principale et à mettre à jour ladite mémoire de valeur de protection principale (27) avec n'importe quelle valeur de protection modifiée.

3. Système informatique selon la revendication 2, dans lequel le circuit fournissant des instructions comprend une unité de commande (12) commune à toutes les unités d'exécution parallèle, ladite unité de commande comportant un circuit de contrôle de file d'attente qui peut être utilisé pour vérifier, avant chaque transmission d'une instruction de protection d'envoi au pipeline d'exécution, qu'aucune précédente instruction modifiant une valeur de protection ayant un effet sur la valeur de protection requise par l'instruction de protection d'envoi est toujours en attente dans la file d'attente d'instructions principale.

4. Système informatique selon l'une quelconque des revendications précédentes, dans lequel chaque unité d'exécution (18-19) comprend une pluralité d'étages de pipeline (13-16) avec des cycles de pipeline synchronisés pour chacune des unités d'exécution.

5. Système informatique selon les revendications 2 et 4, dans lequel le circuit destiné à exécuter des instructions modifiant les valeurs de protection est situé dans un étage de pipeline (EX2) en aval d'un étage de pipeline précédent (DOF, EX1) apte à exécuter des instructions de protection d'envoi.

6. Système informatique selon la revendication 5, comprenant un circuit de commutation dans l'étage de pipeline précédent pour fournir une valeur de protection qui a été modifiée par une instruction modifiant une valeur de protection dans l'étage de pipeline suivant dans un cycle machine en réaction à une instruction de protection d'envoi dans l'étage de pipeline précédent dans le même cycle machine.

7. Système informatique selon la revendication 1, dans lequel chaque unité d'exécution comprend un premier (DOF), un deuxième (EX1) et un troisième (EX2) étage de pipeline, les premier et deuxième étages de pipeline contenant un circuit pour exécuter des instructions de protection d'envoi, et le troisième étage de pipeline (EX2) comprenant un circuit pour exécuter des instructions modifiant les valeurs de protection.

8. Système informatique selon la revendication 7, comprenant un circuit de commutation pour choisir, en réaction à une instruction de protection d'envoi, si une valeur de protection conservée dans la mémoire de valeur de protection principale ou une valeur de protection qui vient d'être modifiée par une instruction modifiant une valeur de protection est acheminée via le circuit de transfert de valeur de protection(112).

9. Système informatique selon l'une quelconque des revendications précédentes, dans lequel lesdites unités d'exécution comprennent des pipelines d'exécution donnant accès à une mémoire de données (20), lesdits pipelines comprenant un premier ensemble de pipelines (15, 16) destinés à l'exécution d'instructions nécessaires pour des opérations d'accès à la mémoire et un deuxième ensemble de pipelines (13, 14) adaptés pour effectuer des opérations arithmétiques, fournissant ainsi un découplage des opérations d'accès à la mémoire d'avec les opérations arithmétiques.

10. Système informatique selon la revendication 9, dans lequel deux pipelines parallèles sont prévus pour les opérations arithmétiques (33) et pour accéder à un ensemble commun de registres de données incluant ladite mémoire de valeur de protection principale.

11. Système informatique selon l'une quelconque des revendications précédentes, dans lequel ladite mémoire de valeur de protection principale comprend un fichier de registre.

12. Procédé d'exécution d'instructions dans un système informatique, lesdites instructions ayant des indicateurs de protection attribués, ledit procédé comprenant la fourniture d'une pluralité d'instructions à des unités d'exécution parallèles (18-19), chaque instruction ayant un indicateur de protection respectif (G) choisi dans un ensemble d'indicateurs de protection commun à la pluralité d'unités d'exécution, le maintien d'un ensemble principal de valeurs courantes pour les indicateurs de protection dans une unité d'exécution, la réalisation d'un transfert de la valeur de protection principale depuis ladite une unité d'exécution en réponse à une instruction de protection d'envoi exécutée dans ladite une unité d'exécution, dans lequel les instructions à fournir à l'unité d'exécution parallèle, sauf lesdites instructions de protection d'envoi, sont conservées dans une file d'attente d'instructions principale (29, 41) et dans lequel lesdites instructions de protection d'envoi sont conservées dans une file d'attente secondaire (200) ayant un accès prioritaire aux pipelines d'exécution pour éviter des retards inutiles dans l'exécution des instructions de protection d'envoi.

13. Procédé selon la revendication 12, comprenant l'exécution d'instructions pour modifier lesdites valeurs de protection, dans lequel l'exécution d'une instruction pour modifier une valeur de protection met à jour ladite valeur principale, lesdites instructions modifiant les valeurs de protection étant conservées dans la file d'attente d'instructions principale (29, 41).

14. Procédé selon la revendication 13, comprenant l'étape consistant à vérifier, avant chaque transmission d'une instruction de protection d'envoi au pipeline d'exécution, qu'aucune précédente instruction modifiant une valeur de protection ayant un effet sur la valeur de protection requise par l'instruction de protection d'envoi est toujours en attente dans la file d'attente d'instructions principale.
